# EUROPEAN PATENT APPLICATION

(11) **EP 2 986 059 A1**
(43) Date of publication of application: **17.02.2016**
(21) Application number: 13881900.8
(22) Date of filing: 12.08.2013
(51) Int. Cl.: H04W 48/18

(54) **METHOD FOR AUTOMATIC NETWORK SEARCH OF MOBILE TERMINAL AND MOBILE TERMINAL**

(30) Priority: 09.04.2013 CN 201310121702
(71) Applicant: ZTE Corporation, Shenzhen, Guangdong 518057 (CN)
(72) Inventor: YANG, Jianjiang, Shenzhen Guangdong 518057 (CN); XUE, Tao, Shenzhen Guangdong 518057 (CN)
(74) Representative: Mozzi, Matteo
(86) International application number: PCT/CN2013/081270
(87) International publication number: WO 2014/166185

(57) **Abstract**

The present invention discloses an automatic network search method for a mobile terminal and a mobile terminal, and relates to the field of mobile communication. The method includes: it is judged whether there is a subscribed operator to which a user identification card is associated or not in network operators at a roaming destination when the mobile terminal is in a roaming state; the search network is performed automatically according to a priority of a network mode supported by the user identification card and the network of the subscribed operator if there is the subscribed operator with which the user identification card is associated; and the search network is performed automatically according to the priority of the network mode supported by the user identification card if there is no subscribed operator with the user identification card is associated. By the present invention, a network required by a user may be automatically found simply and rapidly, and the mobile terminal may automatically roam, so that user experiences are improved.

## Description

### Technical Field

The present invention relates to the field of mobile communication, and in particular to an automatic network search method for a mobile terminal and a related mobile terminal.

### Background

Mobile technology changes life, mobile terminals spread all over the world at present, and one or more operators may operate mobile networks in many countries and areas in the world. Due to upgrading of network systems or regulation of national policies in different times, each operator may operate networks of many systems, and issued mobile telephone cards may be developed from single-mode cards to dual-mode cards and then to multimode cards in the future. In order to compete for customers and solve the problem of frequent mobile phone changing without card (number) changing of users, terminals of the operators support double card slots instead of single card slots, and may be developed to support multiple card slots in the future.

Along with increasing population movement, a terminal must meet requirements of many mobile users on automatic roaming as much as possible, which promotes continuous upgrading of card slots in the terminal from support to single-mode cards to dual-mode cards and then to multimode cards. Diversity of network systems and complexity in mobile terminals cause variability of network search of the mobile terminals, and how to enable a terminal to rapidly and accurately find a network required by a user is a complicated problem.

At present, there are two methods for solving the problem:
1: when a mobile terminal roams to an area of another network operator, it is necessary for a user to search for and switch a network in a manual manner, such a manner has a high requirement on professional knowledge of the user and requires the user to find the network by many operating steps and then switch the network, and if the user does not perform manual searching and complete switching, the mobile terminal may fail to roam, which may cause influence on normal occurrence of a service of the user as well as poor user experiences; and
2: the terminal automatically and randomly searches the whole frequency band for the network after being started, and in such a manner, intentionality is poor and the network is usually searched for a longer time, which wastes time of the user and is unfavourable for life of a battery of the terminal.

### Summary

The embodiment of the present invention provides an automatic network search method for a mobile terminal and a mobile terminal, which may better solve a problem about automatic and rapid network search of the mobile terminal.

According to one aspect of the embodiment of the present invention, an automatic network search method for a mobile terminal is provided, which includes:
when the mobile terminal is in a roaming state, judging whether there is, in a plurality of network operators at a roaming destination, a subscribed operator with which a user identification card is associated ;
based on that there is the subscribed operator with which the user identification card is associated, automatically searching for a network according to a priority of network mode supported by the user identification card and a priority of a network corresponding to the subscribed operator; and
based on that there is no subscribed operator with which the user identification card is associated, automatically searching for a network according to the priority of the network mode supported by the user identification card.

Preferably, before judging whether there is, in the plurality of network operators at the roaming destination, the subscribed operator with which the user identification card is associated when the mobile terminal is in the roaming state, the method further comprises: judging whether the mobile terminal is in the roaming state or not; and based on that the mobile terminal is not in the roaming state, automatically searching for the network according to a network search manner set by the mobile terminal.

Preferably, before judging whether the mobile terminal is in the roaming state or not, the method further comprises: detecting one or more card slots of the mobile terminal in real time; reading information about an operator which issues the user identification card and information about a network mode supported by the user identification card when it is detected that the user identification card is inserted into one of the one or more card slots; and storing the information about the operator which issues the user identification card and information about the network mode supported by the user identification card.

Preferably, judging whether the mobile terminal is in the roaming state or not comprises: searching, according to the network mode, for a network in an area where the mobile terminal is located to obtain at least one parameter of the network in the area where the mobile terminal is located; and comparing the at least one parameter of the network in the area where the mobile terminal is located with at least one network parameter in the information about the operator which issues the user identification card to determine whether the mobile terminal is in the roaming state or not.

Preferably, searching, according to the network mode, for the network in the area where the mobile terminal is located to obtain the at least one parameter of the network in the area where the mobile terminal is located comprises: when the user identification card supports multiple network modes, sequentially searching for networks corresponding to the corresponding network modes according to priorities of the multiple network modes until the at least one parameter of the network in the area where the mobile terminal is located is obtained.

Preferably, comparing the at least one parameter of network in the area where the mobile terminal is located with the at least one network parameter in the information of the operator which issues the user identification card to determine whether the mobile terminal is in the roaming state or not comprises: based on that the at least one parameter of the network in the area where the mobile terminal is located is matched with the at least one network parameter in the information of the operator which issues the user identification card, determining that the mobile terminal is in a non-roaming state, otherwise determining that the mobile terminal is in the roaming state.

Preferably, the method further includes:
when there is a conflict between hardware resources and/or network resources of multiple user identification cards of the mobile terminal, enabling a user identification card inserted in a card slot with a higher priority to use the conflicting hardware resources and/or network resources according to priorities of the multiple card slots corresponding to the multiple user identification cards.

According to the other aspect of the embodiment of the present invention, a mobile terminal for searching a network automatically is provided, which includes:
a subscribed operator determination component configured to, when the mobile terminal is in a roaming state, judge whether there is, in a plurality of network operators at a roaming destination, a subscribed operator to which a user identification card is associated ; and a network search component configured to, when there is the subscribed operator with which the user identification card is associated, automatically search for a network according to a priority of a network mode supported by the user identification card and a priority of a network corresponding to the subscribed operator, and automatically search for the network according to the priority of the network mode supported by the user identification card when there is no subscribed operator to which the user identification card is associated.

Preferably, the mobile terminal further includes:
a roaming determination component configured to judge whether the mobile terminal is in the roaming state or not to enable the network search component to automatically search for the network according to a network search manner set by the mobile terminal under the condition that the mobile terminal is not in the roaming state.

Preferably, the mobile terminal further includes:
a detection component configured to detect one or more card slots of the mobile terminal in real time;
an in-card information acquisition component configured to, when it is detected that the user identification card is inserted into one of the one or more card slots, read information about an operator which issues the user identification card and information about the network mode supported by the User identification card; and
a storage component configured to store the information about the operator which issues the user identification card and information about the supported network mode.

Compared with the related art, the embodiment of the present invention has beneficial effects as follows:
by the embodiment of the present invention, a network required by a user may be automatically found simply and rapidly by pertinent network search, and the mobile terminal may automatically roam, so that user experiences are improved.

### Brief Description of the Drawings

Fig. 1 is a functional block diagram of an automatic network search method for a mobile terminal according to an embodiment of the present invention;
Fig. 2 is a structure diagram of a mobile terminal according to an embodiment of the present invention;
Fig. 3 is a working flowchart of a mobile terminal for searching a network automatically according to an embodiment of the present invention; and
Fig. 4 is a flowchart of an automatic network search method for a mobile terminal according to an embodiment of the present invention.

### Detailed Description of the Embodiments

The preferred embodiment of the present invention is described below with reference to the drawings in detail. It is should be understood that the preferred embodiment described below is only adopted to explain the present invention and not intended to limit the present invention.

In an embodiment of the present invention, when a terminal detects that a user identification card (for example: a Subscriber Identity Module (SIM) card and a User Identity Module (UIM) card, called card hereinafter for short) is inserted into a current card slot, information about an operator which issues the card and information about a network mode supported by the card are read and stored, the terminal determines an area where the card is currently located and judges weather the terminal is in a roaming state after being started. A network is automatically searched according to a network search manner set by the terminal if the terminal is in a non-roaming state, and if the terminal is in the roaming state, information about a network corresponding to a subscribed operator, at a roaming destination, to which the operator issuing the card has subscribed is acquired from a storage component of the terminal according to the area where the terminal is currently located, and then the network is automatically searched according to a priority of the network mode supported by the card and a network mode of the subscribed operator, so that a function of finishing automatically selecting the network without user intervention is realized.

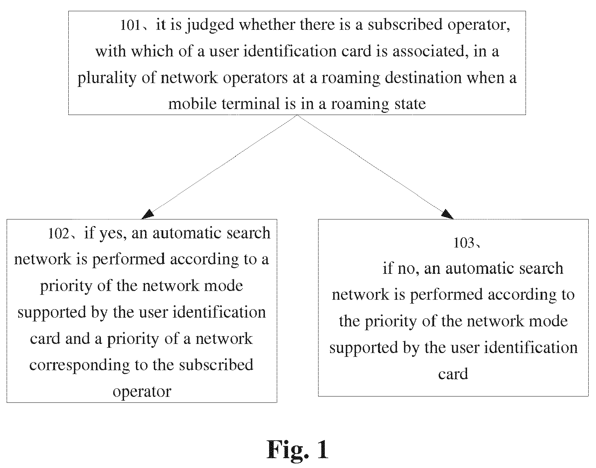

Fig. 1 is a functional block diagram of an automatic network search method for a mobile terminal according to an embodiment of the present invention, and as shown in Fig. 1, the method includes the following steps:
Step 101: it is judged whether there is a subscribed operator, with which of a user identification card is associated, in a plurality of network operators at a roaming destination when a mobile terminal is in a roaming state.

Before Step 101, the method further includes: one or more card slots of the mobile terminal in real time are detected. When it is detected that the user identification card is inserted into one of the one or more card slots, information about an operator which issues the user identification card and a network mode supported by the user identification card is read and stored. A network in an area where the mobile terminal is located is searched to obtain at least one parameter of the network in the area where the mobile terminal is located according to the network mode. The at least one parameter of the network in the area where the mobile terminal is located is compared with a network parameter in the information about the subscribed operator which issues the user identification card to determine whether the mobile terminal is in the roaming state or not. Preferably, when the user identification card supports multiple network modes, networks corresponding to the corresponding network modes are sequentially searched according to priorities of the multiple network modes until the at least one parameter of the network in the area where the mobile terminal is located is obtained. When the at least one parameter of the network in the area where the mobile terminal is located is matched with the at least one network parameter in the information about the subscribed operator which issues the user identification card, it is determined that the mobile terminal is in a non-roaming state, otherwise the mobile terminal is in the roaming state. When the mobile terminal is in the non-roaming state, the network is automatically searched according to a network search manner set by the mobile terminal.

Step 102: if there is the subscribed operator with which the user identification card is associated, an automatic search network is performed according to a priority of the network mode supported by the user identification card and a priority of a network corresponding to the subscribed operator.

Step 103: if there is no subscribed operator with which the user identification card is associated, an automatic search network is performed according to the priority of the network mode supported by the user identification card.

A mobile terminal may include one or more (including two or more than two) card slots, for example, sequentially numbered as card slots 1, 2, 3..., and the card slots with smaller numbers are formed in front. If the mobile terminal includes only one card slot, the card slot is a main card slot, and if the mobile terminal includes multiple card slots, card slot 1 defaults to be the main card slot, the other card slots are additional card slots, and one of the additional card slots may be set to be the main card slot by user.

For a main card slot, if a terminal detects that a card has been inserted into the main card slot when being started, the terminal reads and stores information about an operator which issues the card and a network mode supported by the card. The terminal searches for a network according to a first-priority network mode supported by the card, and judges an area where the card is currently located and whether the terminal is currently in a roaming state or not. An optimal network is selected automatically according to the roaming state of the terminal, an area operated by the operator and the network mode supported by the card. A network system including, but not limited to, network systems such as Long Term Evolution (LTE), Code Division Multiple Access (CDMA) (1X, Evolution-Data Optimized (EVDO)), Wideband Code Division Multiple Access (WCDMA), Time Division-Synchronous Code Division Multiple Access (TD-SCDMA) and Global System for Mobile Communications (GSM).

For an additional card slot, steps of a network search manner is consistent with the steps for the main card slot. The terminal is started. The terminal reads and stores information of an operator which issues the card and a network mode supported by the card if the terminal detects that a card has been inserted into the additional card slot. and the terminal judges an area where the terminal is currently located and a roaming state of the terminal. A search network is performed according to a network search manner set by the terminal if the terminal is in a non-roaming state, and if the terminal is located in a roaming destination, it is necessary to automatically research for a network according to a priority of the network mode supported by the card and a priority of a network mode operated by a subscribed operator, at the roaming destination, with which the operator issuing the card is associated.

It is necessary to additionally consider that: when there is a conflict between hardware resources and/or network resources of multiple user identification cards of the mobile terminal, the user identification cards inserted in high-priority card slots preferably use the conflicting hardware resources and/or network resources according to the priorities of the multiple card slots corresponding to the multiple user identification cards. That is, when the hardware resources and network resources of the terminal conflict with the card slots, for example, a network conflict of the same system occurs to the main card slot and the additional card slots, the hardware resources and the network resources are preferably used by the main card slot (or the card slots with smaller numbers), and when the main card slot or the card slots with smaller numbers are recovered into other systems, the conflict is released, and the additional card slots may be recovered into non-conflicting states.

One embodiment of the present invention further provides a mobile terminal for searching a network automatically, which includes:
a subscribed operator determination component configured to judge whether there is a subscribed operator with which a user identification card is associated or not in a plurality of network operators at a roaming destination when the mobile terminal is in a roaming state;
a network search component configured to automatically search for a network according to a priority of a network mode supported by the user identification card and a priority of the network of the subscribed operator if there is the subscribed operator with which the user identification card is associated, and automatically search for a network according to the priority of the network mode supported by the user identification card if there is no subscribed operator with which the user identification card is associated;
a detection component configured to detect one or more card slots of the mobile terminal in real time;
an in-card information acquisition component configured to read information of an operator which issues the user identification card and the network mode supported by the user identification card when it is detected that the user identification card is inserted into one of the one or more card slots;
a storage component configured to store the information about the operator which issues the user identification card and the supported network mode; and
a roaming determination component configured to judge whether the mobile terminal is in the roaming state or not to enable the network search component to automatically search for the network according to a network search manner set by the mobile terminal if the mobile terminal is not in the roaming state.

The network search component is further configured to automatically search for a network corresponding to the network mode supported by the user identification card when the mobile terminal is in the roaming state and the operator which issues the user identification card has not subscribed to a subscribed operator in an area where the mobile terminal is located, and is configured to, when there is a conflict between hardware resources and/or network resources of multiple user identification cards of the mobile terminal, enable the user identification card in higher priority card slot to preferably use the conflicting hardware resources and/or network resources according to the priorities of multiple card slots corresponding to the multiple user identification cards.

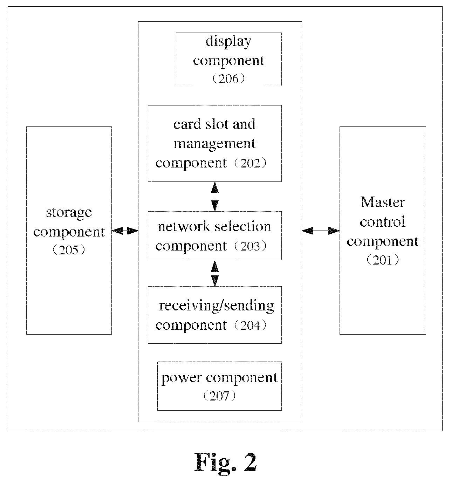

Fig. 2 is a structure diagram of a mobile terminal according to an embodiment of the present invention, and as shown in Fig. 2, the mobile terminal includes a master control component 201, a card slot and management component 202, a network selection component 203, a receiving/sending component 204, a storage component 205, a display component 206 and a power component 207, wherein
the master control component 201 mainly controls coordinated operation of the whole terminal system.

The card slot and management component 202 provides card slots for the terminal system and their corresponding interfaces for card data reading and writing and the like and functions such as management, and determines that the terminal is currently in a roaming state according to read information about the operator which issues the user identification card inserted in the card slot and temporary network related information (network parameters) acquired in a searching process of the network selection component 203. That is, the card slot and management component 202 realizes functions of the abovementioned detection component, in-card information acquisition component and roaming determination component.

The network selection component 203 is configured to execute network search, network authentication, network switching, a power-saving network search strategy and the like according to the roaming state of the terminal and information of subscribed operator in the storage component 205. That is, the network selection component 203 realizes functions of the abovementioned subscribed operator determination component and network search component.

The receiving/sending component 204 is configured to send data to be sent by the terminal to a network side, or receive data sent to the terminal by the network side, wherein a type of the data is a service type or a data type, and the receiving/sending component is a gateway for interaction between the terminal and a network.

The storage component 205 is configured to store related information such as temporary data, service data and historical data in a running process of the terminal, store information (including, but not limited to, related information such as the name of the network operator, the network parameters of the network operator (a Master Control Code (MCC), a Mobile Network Code (MNC) and the like), the network mode, priorities of networks to be selected by a user within an operating area and the subscribed operators) to which the card in the current card slot of the terminal has subscribed. The information about the operator can be updated automatically, and for example, when the operator which issues the user identification card has newly updated subscribed operator information, the user is notified for manual upgrading or the terminal is notified for automatic upgrading in background.

The display component 206 is configured to display the current state of the terminal and feed back information of the terminal to the user.

The power component 207 provides power for the terminal, and provides a power distribution and management function involved in the terminal system.

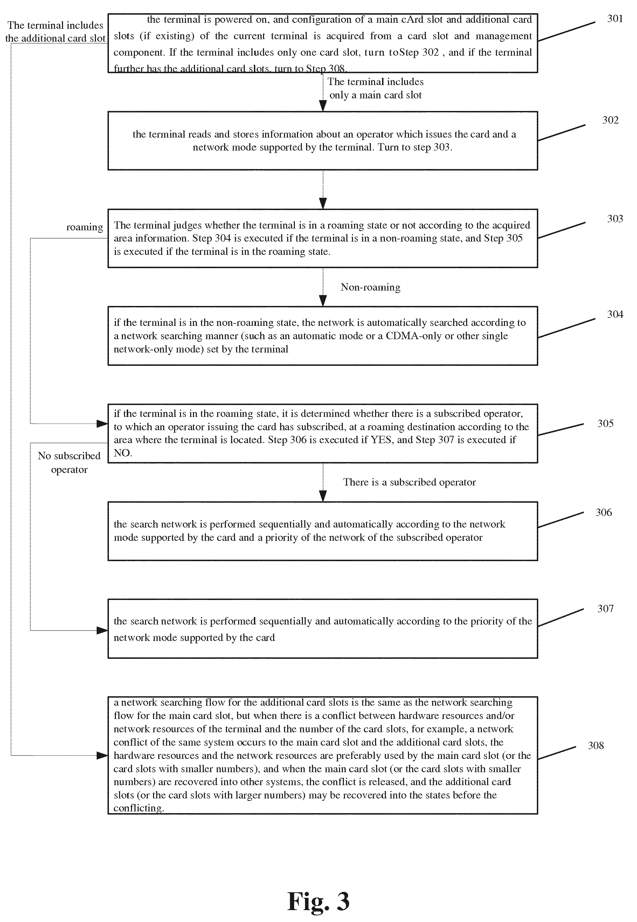

Fig. 3 is a working flowchart of a mobile terminal for automatically searching a network according to an embodiment of the present invention, and the flow includes the following steps:
Step 301: the terminal is powered on, and configuration of a main card slot and additional card slots (if existing) of the current terminal is acquired from a card slot and management component.

If the terminal includes only one card slot, Step 302 is executed, and if the terminal further has the additional card slots, Step 308 is executed.

Step 302: the terminal detects whether a card is currently inserted into the main card slot or not, and if the terminal detects that the card has been inserted into the main card slot, the terminal reads and stores information about an operator which issues the card and a network mode supported by the terminal, and turns to Step 303.

Step 303: the terminal searches for a network at first according to priorities of networks operated by the operator which issues the card, and judges an area where the terminal is currently located and whether the terminal is currently in a roaming state or not according to the network parameters after the network is successfully searched, Step 304 is executed if the terminal is in a non-roaming state, and Step 305 is executed if the terminal is in the roaming state.

Step 304: if the terminal is currently in the non-roaming state, the search network is automatically performed according to a network search manner set by the terminal, the network search manner includes an automatic mode or a CDMA-only or other single network-only mode.

Step 305: if the terminal is currently in the roaming state, an operator information table stored by a storage component is looked up according to the area, where the terminal is located, determined in Step 303, information of the network operated by a subscribed operator, at a roaming destination, to which the operator issuing the card has subscribed is acquired, Step 306 is executed if there is the subscribed operator, and Step 307 is executed if there is no subscribed operator.

Step 306: if there is a subscribed operator, at the roaming destination, to which the operator issuing the card has subscribed, the search network is sequentially and automatically performed according to the network mode supported by the card and a priority of the network of the subscribed operator.

Step 307: if there is not a subscribed operator, at the roaming destination, to which the operator issuing the card has subscribed, the search network is sequentially and automatically performed according to the priority of the network mode supported by the card.

Step 308: if the terminal includes an additional card slot, a network search flow is the same as the network search flow for the main card slot, but it is necessary to additionally consider that when there is a conflict between hardware resources and/or network resources of the terminal and the number of the card slots, for example, a network conflict of the same system occurs to the main card slot and the additional card slot, the hardware resources and the network resources are preferably used by the main card slot (or the card slots with smaller numbers), and when the main card slot or the card slot with smaller number are recovered into other system, the conflict is released, and the additional card slot or the card slot with larger number may be recovered into the state before conflicting.

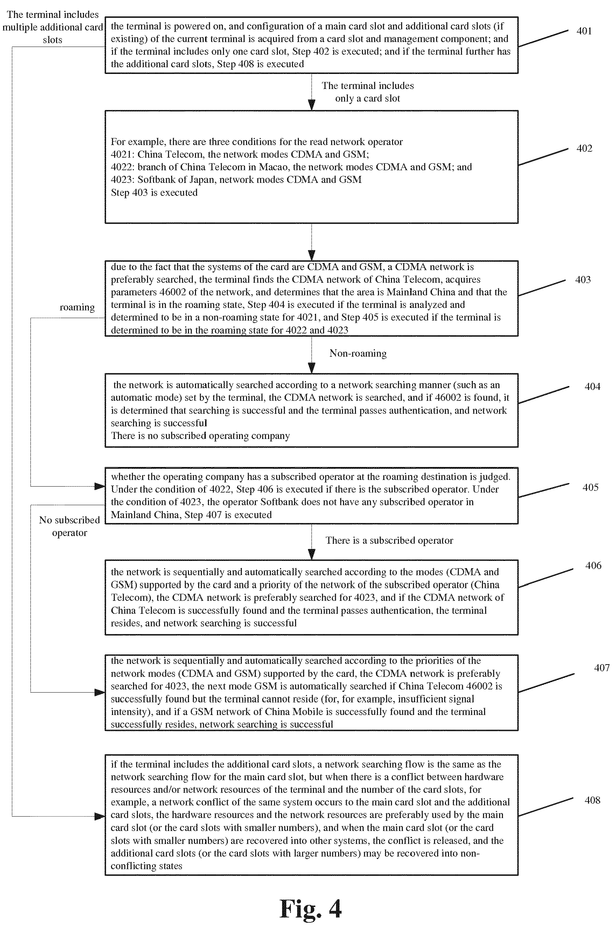

Fig. 4 is a flowchart of an automatic network search method for a mobile terminal according to an embodiment of the present invention, and as shown in Fig. 4, the method includes the following steps:
Step 401: the terminal is powered on, and configuration of a main card slot and additional card slots (if existing) of the current terminal is acquired from a card slot and management component.

If the terminal includes only one card slot, Step 402 is executed; and if the terminal further has an additional card slot, Step 408 is executed.

Step 402: if the terminal is powered on and it is detected that a card has been inserted into the main card slot, the terminal reads and stores information about an operator which issues the card and a network mode supported by the card, and turns to Step 403.

Scenario 1 4021: the terminal reads information about that a CDMA_GSM dual-mode card of China Telecom is inserted into the main card slot, the operator is China Telecom, network parameters MCC and MNC are 46002 and the network modes are CDMA and GSM.

Scenario 2 4022: the terminal reads information about that a CDMA_GSM dual-mode card of a branch of China Telecom in Macao is inserted into the main card slot, the operator is the branch of China Telecom in Macao, the network parameters MCC and MNC are 45502 and the network modes are CDMA and GSM.

Scenario 3 4023: the terminal reads information about that a CDMA_GSM dual-mode card of Softbank of Japan is inserted into the main card slot, the operator is Softbank of Japan, the network parameters MCC and MNC are 44020 and the network modes are CDMA and GSM.

Step 403: due to the fact that the network modes supported by the card in the card slot are CDMA and GSM, the terminal preferably searches for a CDMA network with a higher priority, finds MCC and MNC are 46002, judges that the terminal is currently in Mainland China according to country code 460, and compares and matches Mainland China with operator information read from the card to determine that the terminal is in a roaming state.

For scenario 1 4021 in Step 402, the terminal is determined to be in a non-roaming state, and Step 404 is executed.

For scenario 2 4022 and scenario 3 4023 in Step 402, the MCC and MNC of the terminal are determined to be mismatched with MCC and MNC contained in the information about the operator which issues the card, the terminal is determined to be in the roaming state, and Step 405 is executed.

Step 404: the terminal is in the non-roaming state, and the search network is automatically performed according to a network search manner (such as an automatic mode) set by the terminal.

For scenario 1 4021 in Step 402, a CDMA network of Mainland China is searched, network China Telecom 46002 is found, then it is determined that searching is successful and the terminal passes authentication, the terminal successfully resides in the network, and enters a standby state. The network search process is completed.

Step 405: if the terminal is currently in the roaming state, an operator information table stored by a storage component is queried to judge whether there is a subscribed operator, at the roaming destination, to which the operator issues the card has subscribed.

For scenario 2 4022, there is the subscribed operator China Telecom in Mainland China, and Step 406 is executed.

For scenario 3 4023, if Softbank has not subscribed to any subscribed operator in Mainland China, Step 407 is executed.

Step 406: if the operator which issues the card has the subscribed operator at the roaming destination, the search network is sequentially and automatically performed according to the network mode supported by the card and a priority of the network of the subscribed operator.

For scenario 2 4022, for a card issued by the branch of China Telecom in Macao, the CDMA network of China Telecom is preferably searched, and if the terminal successfully searches for the CDMA network 46002 and passes authentication, the terminal succeeds in network search and residence.

Step 407: if the operator which issues the card has not the subscribed operator at the roaming destination, the network is sequentially and automatically searched according to the priority of the network mode supported by the card.

For scenario 3 4023, for a card issued by Softbank of Japan, a CDMA network is preferably searched, it is determined that the network search fails if 46002 is successfully found but the terminal cannot reside for reasons such as insufficient signal intensity, the terminal automatically searches for the next mode GSM, and for example, if a GSM network of China Mobile is successfully found and the terminal successfully resides and passes authentication, the card roams to the GSM network of China Mobile and is successfully registered.

Step 408: a network search flow for the additional card slot is the same as the network search flow for the main card slot, but when there is a conflict between hardware resources and/or network resources of the terminal and the number of the card slots, for example, a network conflict of the same system occurs to the main card slot and the additional card slot, the hardware resources and the network resources are preferably used by the main card slot (or the card slot with smaller number), and when the main card slot or the card slot with smaller numbers are recovered into other system, the conflict is released, and the additional card slot or the card slot with larger numbers may be recovered into the state before conflicting.

In Step 408, if a CDMA/GSM dual-mode card is inserted into the main card slot, the card is successfully registered to a CDMA network, signal quality of the CDMA network is lower than a residing threshold when the terminal searches for the network and the terminal has only one set of GSM radio frequency circuit to be shared by the main card slot and the additional card slot, the card in the main card slot preferably roams to the GSM network, while the card in the additional card slot may only be an offline waiting state. After the signal quality of the CDMA network is recovered to be normal, the main card slot is recovered to be registered to the CDMA network, the additional card slot periodically finds the GSM network in a power-saving mode, and if authentication succeeds, residence in the GSM network may be allowed.

The embodiment of the present invention supports the condition that the terminal includes a single card slot, and also supports mobile terminals with double card slots, three card slots and more card slots, and cards in the card slots may be the simplest single-mode cards, and may also be combinations of various conditions of dual-mode cards, multimode cards and the like.

The network modes involved in the embodiment of the present invention include various systems such as GSM, CDMA, WCDMA, CDMA2000 (1x/EVDO), TD-SCDMA and subsequent LTE-A.

From the above, the embodiment of the present invention has technical effects as follows:
an implementation logic of the embodiment of the present invention is clear, the network can be automatically searched without manual operation of the user, great convenience is brought to the user, and user experiences are improved.

Although the present invention is described above in detail, but the present invention is not limited, and those skilled in the art may make various modifications according to a principle of the present invention. Thus, all modifications made according to the principle of the present invention shall fall within the scope of protection of the present invention.

## Claims

1. An automatic network search method for a mobile terminal, **characterized by** comprising:
when the mobile terminal is in a roaming state, judging whether there is, in a plurality of network operators at a roaming destination, a subscribed operator with which a user identification card is associated ;
based on that there is the subscribed operator with which the user identification card is associated, automatically searching for a network according to a priority of network mode supported by the user identification card and a priority of a network corresponding to the subscribed operator; and
based on that there is no subscribed operator with which the user identification card is associated, automatically searching for a network according to the priority of the network mode supported by the user identification card .

2. The method according to claim 1, **characterized in that** before judging whether there is, in the plurality of network operators at the roaming destination, the subscribed operator with which the user identification card is associated when the mobile terminal is in the roaming state, the method further comprises:
judging whether the mobile terminal is in the roaming state or not; and
based on that the mobile terminal is not in the roaming state, automatically searching for the network according to a network search manner set by the mobile terminal.

3. The method according to claim 2, **characterized in that** before judging whether the mobile terminal is in the roaming state or not, the method further comprises:
detecting one or more card slots of the mobile terminal in real time;
reading information about an operator which issues the user identification card and information about a network mode supported by the user identification card when it is detected that the user identification card is inserted into one of the one or more card slots; and
storing the information about the operator which issues the user identification card and information about the network mode supported by the user identification card.

4. The method according to claim 3, **characterized in that** judging whether the mobile terminal is in the roaming state or not comprises:
searching, according to the network mode, for a network in an area where the mobile terminal is located to obtain at least one parameter of the network in the area where the mobile terminal is located; and
comparing the at least one parameter of the network in the area where the mobile terminal is located with at least one network parameter in the information about the operator which issues the user identification card to determine whether the mobile terminal is in the roaming state or not.

5. The method according to claim 4, **characterized in that** searching, according to the network mode, for the network in the area where the mobile terminal is located to obtain the at least one parameter of the network in the area where the mobile terminal is located comprises:
when the user identification card supports multiple network modes, sequentially searching for networks corresponding to the corresponding network modes according to priorities of the multiple network modes until the at least one parameter of the network in the area where the mobile terminal is located is obtained.

6. The method according to claim 5, **characterized in that** comparing the at least one parameter of network in the area where the mobile terminal is located with the at least one network parameter in the information of the operator which issues the user identification card to determine whether the mobile terminal is in the roaming state or not comprises:
based on that the at least one parameter of the network in the area where the mobile terminal is located is matched with the at least one network parameter in the information of the operator which issues the user identification card, determining that the mobile terminal is in a non-roaming state, otherwise determining that the mobile terminal is in the roaming state.

7. The method according to any one of claims 1 to 6, **characterized by** further comprising:
when there is a conflict between hardware resources and/or network resources of multiple user identification cards of the mobile terminal, enabling a user identification card inserted in a card slot with a higher priority to use the conflicting hardware resources and/or network resources according to priorities of the multiple card slots corresponding to the multiple user identification cards.

8. A mobile terminal for searching for a network automatically, **characterized by** comprising:
a subscribed operator determination component configured to, when the mobile terminal is in a roaming state, judge whether there is, in a plurality of network operators at a roaming destination, a subscribed operator to which a user identification card is associated ; and
a network search component configured to, when there is the subscribed operator with which the user identification card is associated, automatically search for a network according to a priority of a network mode supported by the user identification card and a priority of a network corresponding to the subscribed operator, and automatically search for the network according to the priority of the network mode supported by the user identification card when there is no subscribed operator to which the user identification card is associated.

9. The mobile terminal according to claim 8, **characterized by** further comprising:
a roaming determination component configured to judge whether the mobile terminal is in the roaming state or not to enable the network search component to automatically search for the network according to a network search manner set by the mobile terminal under the condition that the mobile terminal is not in the roaming state.

10. The mobile terminal according to claim 9, **characterized by** further comprising:
a detection component configured to detect one or more card slots of the mobile terminal in real time;
an in-card information acquisition component configured to, when it is detected that the user identification card is inserted into one of the one or more card slots, read information about an operator which issues the user identification card and information about the network mode supported by the User identification card; and
a storage component configured to store the information about the operator which issues the user identification card and information about the supported network mode.
